# EUROPÄISCHE PATENTSCHRIFT

(11) **EP 1 947 890 B1**
(45) Veröffentlichungstag und Bekanntmachung des Hinweises auf die Patenterteilung: **14.03.2012**
(21) Anmeldenummer: 08000814.7
(22) Anmeldetag: 17.01.2008
(51) Int. Cl.: H04W 8/18, H04Q 3/00

(54) **Rufnummernportierung**
Telephone number porting
Portage du numéro d'appel

(30) Priorität: 19.01.2007 DE 102007002966
(43) Veröffentlichungstag der Anmeldung: 23.07.2008
(73) Patentinhaber: Giesecke & Devrient GmbH, 81677 München (DE)
(72) Erfinder: Schönberner, Rainer, 85604 Zorneding (DE); Müller, Bernd, 81929 München (DE)

(56) Entgegenhaltungen:
- EP-A- 1 370 107
- WO-A-2005/069594
- WO-A-2006/082123
- WO-A-2008/026049
- US-B1- 6 192 115

## Beschreibung

Die Erfindung betrifft ein auf einem portablen Datenträger auszuführendes Verfahren zum Ermitteln eines Portierungsstatus einer Menge von Mobilfunkrufnummern sowie einen entsprechend eingerichteten portablen Datenträger.

Benutzer von Mobilfunkendgeräten zum Kommunizieren in Mobilfunknetzen können ihre Rufnummern einschließlich der Netzvorwahl behalten, wenn sie den Betreiber des Mobilfunknetzes wechseln. Der Netzvorwahl einer solchen so genannten portierten Rufnummer, also einer Rufnummer, die bei einem Wechsel des Netzbetreibers beibehalten worden ist, kann ein Anrufer nicht ansehen, ob es sich um eine portierte Rufnummer handelt, und insbesondere welches der aktuelle Netzbetreiber ist, der die Rufnummer bereitstellt und über den die anfallende Gebühren abgerechnet werden.

Um den Benutzern ein Abfragen des Portierungsstatus einer Mobilfunkrufnummer zu ermöglichen, d.h. die Möglichkeit zu geben, herauszufinden, welches der aktuelle Netzbetreiber der Mobilfunknummer ist, wird von den Netzbetreibern ein gemeinsamer Portierungsserver betrieben, über welchen die Benutzer aus einer zentralen Datenbank den Portierungsstatus abfragen können. Der Portierungsstatus einer Mobilfunkrufnummer ist für einen Benutzer deshalb interessant, da zumeist Verbindungen in fremde Mobilfunknetze, d.h. Mobilfunknetze, die verschieden von dem Netz sind, dem das betreffende Mobilfunkendgerät angehört, erheblich teurer sind als Verbindungen in das eigene Mobilfunknetz.

In der WO 2004/073328 A1 wird beschrieben, wie vor oder während eines Aufbaus einer Kommunikationsverbindung zu einem Mobilfunkendgerät mit einer portierten Rufnummer durch eine Anfrage bei einer Datenbank, die eine Vielzahl von portierten Rufnummern enthält, geprüft wird, ob es sich bei der Rufnummer des Mobilfunkendgeräts um eine portierte Rufnummer handelt. Falls dies der Fall ist, wird der aktuelle Netzbetreiber des Mobilfunkendgeräts ermittelt und anschließend wird eine Verbindung zu dem Mobilfunkendgerät direkt über das Netz dieses aktuellen Netzbetreibers hergestellt. Ähnliche Lösungen zeigen WO 2005/069594 A1, US 6,192,115 B1 und EP 1370107 A1.

Die WO 2005/046197 A1 beschreibt ein Verfahren zum Betreiben eines Mobilfunkendgerätes in einem Mobilfunknetz mittels eines Sicherheitsmoduls, beispielsweise einer SIM-Mobilfunkkarte. Das Verfahren zeichnet sich dadurch aus, dass von dem Mobilfunkendgerät - vorzugsweise gesteuert durch das Sicherheitsmodul - unmittelbar vor oder zu Beginn der Inanspruchnahme eines gebührenpflichtigen Dienstes angezeigt wird, zu welchem Gebührensatz der gebührenpflichtige Dienst abgerechnet werden wird. Diese Gebühreninformation wird vor der Anzeige durch das Mobilfunkendgerät über das Mobilfunknetz angefordert.

Die DE 199 48 950 A1 beschreibt einen personenbezogenen portablen Datenträger, beispielsweise eine SIM-Mobilfunkkarte, wobei in einem Speicher des Datenträgers Netzvorwahlen von mindestens einem Dienstanbieter zur Herstellung von Sprach- oder Datenverbindungen zu anderen Teilnehmern gespeichert sind. Zusätzlich können Tarifdaten und dergleichen zu den Netzvorwahlen der Dienstanbieter gespeichert werden, um einer eventuell zusätzlich vorhandenen Applikation zu erlauben, abhängig beispielsweise von Uhrzeit und Wochentag, die günstigste Verbindung zu einem anderen Teilnehmer zu ermitteln.

WO2006/082123 A1 und WO 2008/026049 A2 offenbaren den Oberbegriff der unabhängigen Ansprüche.

Es ist die Aufgabe der vorliegenden Erfindung, ein Verfahren bereitzustellen, welches einfach und effizient Portierungsinformationen zu Mobilfunkrufnummern ermittelt.

Diese Aufgabe wird durch ein Verfahren und einen Datenträger mit den Merkmalen der unabhängigen Ansprüche gelöst. Vorteilhafte Ausgestaltungen und Weiterbildungen der Erfindung sind in den davon abhängigen Ansprüchen angegeben.

Auf einem portablen Datenträger ist ein Verfahren zum Ermitteln eines Portierungsstatus zu einer Rufnummer implementiert, welches unabhängig von einem Verbindungsaufbau zu einer bereitgestellten Rufnummer eine Portierungsanfrage, die den Portierungsstatus der Rufnummer betrifft, an einen Portierungsserver sendet und eine Portierungsinformation von dem Server als Antwort auf die Portierungsanfrage empfängt. Der Portierungsstatus wird anschließend basierend auf der empfangenen Portierungsinformation in Verbindung mit der Rufnummer auf dem Datenträger gespeichert.

Unabhängig von einem Verbindungsaufbau zu der Rufnummer ist sowohl zeitlich als auch technisch zu verstehen, d.h. ein Senden einer Portierungsanfrage für eine bestimmte Rufnummer an einen Portierungsserver ist in keiner Weise an einen nachfolgenden Aufbau einer Kommunikationsverbindung zu dieser Rufnummer gekoppelt. Genauso wenig führt ein Verbindungsaufbau zu der Rufnummer automatisch zum Senden einer entsprechenden Portierungsanfrage. Beide Verfahren, das Ermitteln des Portierungsstatus einer Rufnummer und das Herstellen einer Kommunikationsverbindung zu dieser Rufnummer, sind erfindungsgemäß vollständig eigenständige und unabhängige Verfahren, die in keinem zeitlichen oder technischen Zusammenhang stehen.

Einem Benutzer wird dadurch ermöglicht, zu jeder gewünschten Rufnummer und zu jedem Zeitpunkt einfach den Portierungsstatus der Rufnummer zu ermitteln. Rufnummern aus Fremdnetzen sind auf diese Weise immer aktuell bekannt. Gleichzeitig ermöglicht das Speichern des Portierungsstatus in Verbindung mit der Rufnummer, dass bei einem späteren Verbindungsaufbau zu der Rufnummer, der zu einem beliebigen, vom Benutzer gewünschten Zeitpunkt erfolgen kann, keine Zeitverzögerung für eine Abfrage des Portierungsstatus der Rufnummer oder für eine weitere Bestätigung einer aus dem Portierungsstatus resultierenden Kosteninformation durch den Benutzer eintritt, da die gewünschte Information bereits vorliegt und bei Bedarf effizient direkt eingesehen oder angezeigt werden kann. Zum Zeitpunkt des Wählens einer Rufnummer wird der Benutzer über den Portierungsstatus der Rufnummer nicht mehr informiert, so dass er das Gespräch auch völlig unabhängig von dem Portierungsstatus durchführen kann, falls das Gespräch beispielsweise so wichtig ist, dass ihn die Gebührensituation nicht interessiert.

Der Datenträger umfasst dazu einen Speicher zum Speichern des Portierungsstatus zu angefragten Rufnummern, eine Kommunikationsschnittstelle, über welche der Datenträger Daten - insbesondere die Portierungsanfrage und die Portierungsinformation - sendet und empfängt, sowie eine Applikation, mittels derer das erfindungsgemäße Verfahren implementiert ist.

Das Senden der Portierungsanfrage kann automatisch von dem Datenträger oder manuell von einem Benutzer bewirkt werden. Es ist also beispielsweise möglich, dass für eine Rufnummer, für die auf dem Datenträger noch keine Portierungsinformation gespeichert ist, automatisch von dem Datenträger eine Portierungsanfrage an einen Portierungsserver gesendet wird. Der Benutzer kann eine solche Abfrage aber auch manuell bewirken.

Vorzugsweise wird eine Portierungsanfrage für eine gegebene Rufnummer in regelmäßigen Abständen, die gewöhnlich vom Benutzer einstellbar und veränderbar sind, erneut zu einem Portierungsserver gesendet, um den Portierungsstatus einer Rufnummer, der sich in der Zwischenzeit aufgrund eines Netzbetreiberwechsels geändert haben könnte, gegebenenfalls aktualisieren zu können. Auf diese Weise ist der Benutzer stets im Besitz aktueller Portierungsinformationen für die Rufnummern, die für ihn interessant sind.

Bevorzugt wird der zu einer Rufnummer ermittelte Portierungsstatus gemeinsam mit der Rufnummer in dem Speicher des portablen Datenträgers gespeichert, beispielsweise als separater Eintrag neben der Rufnummer in einem elektronischen Telefonbuch, das in dem Speicher des Datenträgers abgelegt ist.

Die von der Applikation empfangene Portierungsinformation muss nicht unverändert als Portierungsstatus abgespeichert werden, sondern kann von der Applikation einer Veränderung oder Bearbeitung unterzogen werden, um den Portierungsstatus in zweckmäßiger Weise und für den Benutzer unmittelbar erkennbar zu hinterlegen. Die Form des Eintrags, der basierend auf der empfangen Portierungsinformation generiert und gespeichert wird, kann variieren und vom Benutzer einstellbar sein. Beispielsweise kann eine Rufnummer im selben Mobilfunknetz direkt neben der Rufnummer mit einem "i" für netzintern und eine Rufnummer im einem Fremdnetz mit einem "e" für netzextern gekennzeichnet sein. Auch Sonderzeichen, wie beispielsweise #, * und dergleichen können zur Kennzeichnung des Portierungsstatus verwendet werden. Es ist auch möglich, vollständige Daten zum aktuellen Netzbetreiber, wie beispielsweise Namen und Vorwahl desselben, gemeinsam mit der Rufnummer zu speichern. Auf diese Weise hat der Benutzer bei einem Blick in das Verzeichnis von gespeicherter Rufnummern direkt und einfach Zugriff auf den entsprechenden Portierungsstatus zu jeder dieser Rufnummern.

Das Verfahren kann sequentiell für alle Rufnummern einer Menge von Rufnummern, z.B. sämtliche Rufnummern eines elektronischen Telefonbuchs, oder die Mobilfunkrufnummern der Menge von Rufnummern durchgeführt werden, wobei die Menge von Rufnummern sowohl Rufnummern umfassen kann, die auf dem Datenträger gespeichert sind, als auch solche, die von einem Benutzer manuell bereitgestellt werden. Dadurch wird es beispielsweise möglich, den Portierungsstatus zu allen auf dem Datenträger gespeicherten Rufnummern mit einer Durchführung des Verfahrens zu bestimmen bzw. zu aktualisieren. Ebenso kann der Portierungsstatus zu manuell vom Benutzer über die Kommunikationsschnittstelle eingegebenen, eventuell noch nicht in dem Datenträger gespeicherten Rufnummern ermittelt werden. Eine Einschränkung auf Mobilfunkrufnummern ist möglich sowie auf eine Menge von Rufnummern, die seit der letzten Durchführung des Verfahrens neu zu der Menge von auf dem Datenträger gespeicherten Rufnummern hinzugekommen sind. Der Nutzer kann also bestimmen, ob er einzelne ausgewählte Rufnummern oder die Gesamtmenge aller auf dem Datenträger gespeicherten Rufnummern einer Portierungsstatusabfrage unterziehen will.

Der portable Datenträger kann als Mobilfunkkarte, beispielsweise als SIM-Mobilfunkkarte, ausgebildet sein und das Verfahren mittels einer auf der Mobilfunkkarte ausführbaren Applikation implementiert werden. Die Menge der Rufnummern kann beispielsweise der in einem elektronischen Telefonbuch der Mobilfunkkarte gespeicherten Rufnummern entsprechen. Das Verfahren kann dann auf die in dem elektronischen Telefonbuch gespeicherte Rufnummern angewendet werden. Vorzugsweise wird der zu einer Rufnummer ermittelte Portierungsstatus zusammen mit der Rufnummer in dem Telefonbuch abgespeichert, beispielsweise als ein weiterer zu der Nummer gehöriger Eintrag neben beispielsweise dem Namen des Besitzers der Rufnummer. Der Benutzer erhält dann bei einem Blick in das Telefonbuch direkt den Portierungsstatus zu der nachgeschlagenen Rufnummer und kann sein Telefonverhalten im Zusammenhang mit dieser Rufnummer diesem Portierungsstatus anpassen. Da das Ermitteln des Portierungsstatus und das Herstellen einer Verbindung zu der Rufnummer völlig unabhängig voneinander sind, kann der Benutzer aber auch ohne Kenntnis des Portierungsstatus der Rufnummer einer Verbindung zu derselben herstellen.

Nachfolgend wird die Erfindung anhand der begleitenden Zeichnungen beispielhaft beschrieben. Darin zeigen:
- Figur 1: einen erfindungsgemäßen Datenträger; und
- Figur 2: schematisch die Schritte einer bevorzugten Ausführungsform des erfindungsgemäßen Verfahrens.

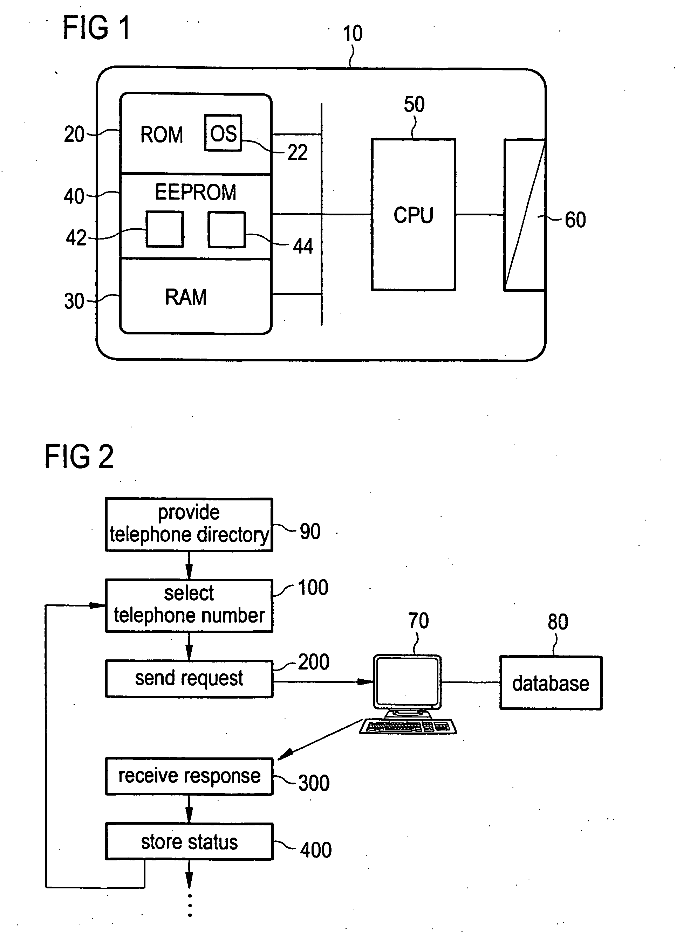

Mit Bezug auf Figur 1 umfasst ein erfindungsgemäßer Datenträger 10 einen nichtflüchtigen, nicht wiederbeschreibbaren, schnellen ROM-Speicher 20, in dem der Kern eines Betriebssystems 22 (OS) des Datenträgers 10 gespeichert ist, einen flüchtigen Arbeitsspeicher (RAM) 30 zum Bereitstellen von schnell zugreifbarem Speicherplatz zum Ausführen von Berechnungen und einen nichtflüchtigen, wiederbeschreibbaren Speicher 40 zum dauerhaften Speichern von Daten, der z.B. als EEPROM-Speicher ausgebildet sein kann. Alternativ kann der Speicher 40 auch als Flash-Speicher oder dergleichen ausgebildet sein. Ferner umfasst der Datenträger 10 einen Prozessor 50 (CPU), die mit den Speichern 20, 30 und 40 verbunden ist und auf diese mittels des Betriebssystems 22 zugreifen kann. Über eine mittels dem Betriebssystem 22 zugehörige Treiber gesteuerte Kommunikationsschnittstelle 60 empfängt und sendet der Datenträger 10 Daten. Die Kommunikationsschnittstelle 60 kann zur kontaktbehafteten und/ oder kontaktlosen Kommunikation mit einem Lesegerät ausgebildet sein.

Der Speicher 40 umfasst einen Speicherbereich 42, in dem auf dem Datenträger 10 ausführbare Applikationen gespeichert sein können. Solche Applikationen können auch - ganz oder teilweise-, wie der Betriebssystemkern 22, in dem ROM-Speicher 20 gespeichert sein. In einem weiteren Speicherbereich 44 des Speichers 40 können Daten gespeichert werden, die von auf dem Datenträger 10 ausführbaren Applikationen erzeugt werden oder über die Kommunikationsschnittstelle 60 in den Datenträger 10 eingebracht werden.

Der Datenträger 10 kann als Mobilfunkkarte, beispielsweise als SIM-Mobilfunkkarte, ausgebildet sein.

Mit Bezug auf Figur 2 wird bei einer bevorzugten Ausgestaltung des erfindungsgemäßen Verfahrens ein komplettes Telefonbuch eines als SIM-Mobilfunkkarte 10 ausgebildeten portablen Datenträgers 10 überprüft (provide telephone directory) 90, das beispielsweise in dem Speicherbereich 44 des Speichers 40 liegen kann. Der Portierungsstatus jeder Rufnummer in dem Telefonbuch wird dann durch die Schleife 100 bis 400 ermittelt. Wenn alle Rufnummern überprüft sind, ist das Verfahren beendet.

In einem ersten Schritt 100 der bevorzugten Ausführungsform des Verfahrens zum Ermitteln eines Portierungsstatus wird eine Rufnummer, zu der der Portierungsstatus ermittelt werden soll, aus dem Telefonbuch ausgewählt (select telephone number). Eine solche Rufnummer ist üblicherweise in einem Speicherbereich 44 des Speichers 40 gespeichert, beispielsweise als ein Eintrag in einem elektronischen Telefonbuch oder in einer anderen Liste, beispielsweise einer Liste entgangener Anrufe oder dergleichen. Eine zu prüfende Rufnummer kann auch von einem Benutzer über die Kommunikationsschnittstelle 60 in den Datenträger 10 eingebracht werden, beispielsweise über eine Tastatur oder eine Datenschnittstelle eines Mobilfunkendgeräts.

Das Verfahren wird mittels einer auf dem Datenträger 10 ausführbaren Applikation durchgeführt, d.h. die Applikation ist eingerichtet, die Schritte des Verfahrens auszuführen. Die Applikation ist in dem Speicherbereich 42 des Speichers 40 gespeichert. Auf diese Weise ist es z.B. möglich, die Applikation nach der Ausgabe des Datenträgers 10 an den Benutzer zu aktualisieren oder anzupassen, beispielsweise über eine Luftschnittstelle (OTA, "over the air"). Die Applikation oder einige ihrer Komponenten können auch, dann jedoch während des Lebenszyklus des Datenträgers 10 unveränderbar, in dem ROM-Speicher 20 gespeichert sein. Geeignete Zugriffsrechte der Applikation auf die Ressourcen des Datenträgers 10, beispielsweise auf die CPU 50, die Kommunikationsschnittstelle 60 und den Speicher 40, regelt das Betriebssystem 22. Der Benutzer kann mit der Applikation über die Kommunikationsschnittstelle 60 des Datenträgers 10 kommunizieren. Ist der Datenträger 10 als Mobilfunkkarte, beispielsweise als SIM-Mobilfunkkarte ausgebildet, so ist die Applikation eine auf einer Mobilfunkkarte ausführbare Applikation, beispielsweise eine SIM-Applikation-Toolkit-Anwendung, und der Benutzer kann mit der Applikation beispielsweise über eine Tastatur oder eine andere Datenschnittstelle eines Mobilfunkendgeräts, in welches der Datenträger 10 eingesetzt ist, kommunizieren. Eine Anzeige, wie beispielsweise ein Display des Mobilfunkendgeräts, vereinfacht diese Kommunikation.

Es ist möglich, dass die Rufnummer als einzelne Rufnummer bereitgestellt wird, für die das Verfahren durchgeführt werden soll. Ebenso kann die Rufnummer eine Rufnummer aus eine Mehrzahl von Rufnummern sein, für die das Verfahren sequentiell durchgeführt werden soll, wie es in der mit Bezug auf Figur 2 dargestellten bevorzugten Ausführungsform des Verfahrens der Fall ist. Beispielsweise können dies, wie vorstehend beschrieben, die Rufnummern - oder eine Teilmenge von Rufnummern - sein, die auf dem portablen Datenträger 10 gespeichert sind, vorzugsweise in Form von Einträgen in einem elektronischen Telefonbuch, das in dem Speicherbereich 44 gespeichert ist. Ein als SIM-Mobilfunkkarte ausgebildeter Datenträger 10 umfasst in dem Speicherbereich 44 standardmäßig ein solches elektronisches Telefonbuch, in dem zu jeder gespeicherten Nummer zusätzliche Einträge, beispielsweise der Name oder die e-Mail-Adresse des Besitzers der Rufnummer, gespeichert werden können. Teilmengen von Rufnummern können beispielsweise Mobilfunkrufnummern sein oder vordefinierte Gruppen von Rufnummern oder dergleichen.

Zu der bereitgestellten Rufnummer kann bereits ein Portierungsstatus bekannt sein, wenn z.B. das Verfahren für diese Rufnummer zu einem früheren Zeitpunkt bereits durchgeführt worden ist, oder wenn der Portierungsstatus z.B. über eine Unterfunktion der Applikation direkt in den Speicher 40 des Datenträgers 10 eingebracht worden ist. In diesem Fall dient eine Durchführung des Verfahrens für diese Rufnummer der Überprüfung und gegebenenfalls der Aktualisierung des aktuell bekannten Portierungsstatus, falls sich dieser zwischenzeitlich durch einen Netzbetreiberwechsel geändert hat, oder falls die SIM-Mobilfunkkarte 10 selbst in einem anderen Mobilfunknetz registriert worden ist und sich dadurch alle bisher bekannten Portierungsstatus im Bezug auf die SIM-Mobilfunkkarte 10 ändern.

Es ist jedoch auch möglich, dass für die bereitgestellte Rufnummer noch kein Portierungsstatus bekannt ist, da es sich beispielsweise um eine für den Benutzer neue Rufnummer handelt. Bei der vorstehend angesprochenen Teilmenge von Rufnummern, für die das Verfahren sequentiell durchgeführt werden soll, kann es sich also beispielsweise um auf dem Datenträger 10 gespeicherte Rufnummern handeln, die nach der letzten Durchführung des Verfahrens gespeichert worden sind und für die bisher kein Portierungsstatus bekannt ist. Ein Durchführen des Verfahrens für alle solchen Rufnummern in regelmäßigen Abständen stellt sicher, dass der Benutzer zeitnah den Portierungsstatus zu allen gespeicherten Rufnummern kennt. Bevorzugt kann der Benutzer einstellen, in welchen Abständen ein solcher Durchlauf des Verfahrens gestartet werden soll und/ oder wie viele Rufnummern in dem Datenträger 10 höchstens gespeichert werden sollen, zu denen kein Portierungsstatus bekannt ist, bis ein solcher Durchlauf des Verfahrens gestartet wird.

Es liegt im Rahmen der Erfindung, dass Rufnummern, zu denen ein Portierungsstatus bekannt ist, periodisch, vorzugsweise in regelmäßigen Abständen, herangezogen werden, um den Portierungsstatus dieser Rufnummern erneut zu ermitteln - aus vorstehend erwähnten Gründen. Vorzugsweise kann der Benutzer die Zeiträume zwischen zwei Durchführungen des Verfahrens für die Rufnummern einstellen und verändern, global für alle Rufnummern und/ oder separat für Gruppen von Rufnummern und/ oder für jede Rufnummer einzeln.

In Schritt 200 wird eine Portierungsanfrage zu der bereitgestellten Rufnummer von dem Datenträger 10 über die Kommunikationsschnittstelle 60 an einen Portierungsserver 70 gesendet (send request), der Zugriff auf eine Datenbank 80 besitzt, in der Portierungsinformationen zu sämtlichen oder zumindest einer großen Menge von Rufnummern gespeichert sind. Eine solche Anfrage wird für gewöhnlich mittels eines Mobilfunkendgeräts durch eine spezielle Kurzwahl, SMS, WAP oder ein ähnliches Protokoll in Verbindung mit der Rufnummer, für die der Portierungsstatus ermittelt werden soll, gestellt. Bei dem Portierungsserver kann es sich um einen Server handeln, der, wie in Fig. 2 gezeigt, direkten Zugriff auf die zentrale Datenbank (z.B. die zentrale Master Routing Datenbank von T-Systems, "zMRDB") besitzt oder beispielsweise um einen Server bei einem Netzbetreiber, der die Anfrage an die zMRDB weiterleitet.

Das Senden der Anfrage kann von der auf dem Datenträger 10 laufenden Applikation automatisch bewirkt werden. Es ist jedoch auch möglich, dass das Senden durch eine Aktion des Benutzers initiiert wird. Bevorzugt kann der Benutzer einstellen und verändern, auf welche Weise das Senden einer Portierungsanfrage initiiert wird, d.h. er kann beispielsweise ein automatisches Senden von Portierungsanfragen zeitweise deaktivieren zugunsten eines manuellen Bewirkens des Sendens solcher Anfragen.

Obgleich das Senden einer Portierungsanfrage für eine Rufnummer an den Portierungsserver 70 erfindungsgemäß vollständig unabhängig ist von einem Verbindungsaufbau zu der Rufnummer, sowohl zeitlich als auch technisch, ist es selbstverständlich auch möglich, dass ein Verbindungsaufbau zu einer Rufnummer durch den Datenträger 10 unterbrochen wird, beispielsweise durch ein "Call Control Script" zum Unterbrechen des Wählvorgangs, und durch den Datenträger automatisch eine Portierungsanfrage die Rufnummer betreffend an den Portierungsserver 70 gesendet wird. Der Benutzer kann dann nach Erhalt der empfangen Portierungsinformation - wie nachstehend genauer beschrieben - entscheiden, ob er den gestarteten Anruf fortsetzen möchte oder nicht.

In Schritt 300 empfängt der Datenträger 10 über die Kommunikationsschnittstelle 60 eine Portierungsinformation von dem Portierungsserver 70 als Antwort auf die in Schritt 200 gesendete Portierungsanfrage den Portierungsstatus der in Schritt 100 bereitgestellten Rufnummer betreffend (receive response). Falls die Anfrage über einen Server eines Netzbetreibers an die zMRDB weitergeleitet wurde, so wird nun auch die Antwort wieder von der zMRDB über den Server an den Datenträger 10 weitergeleitet.

In Schritt 400 wird der Portierungsstatus der in Schritt 100 bereitgestellten Rufnummer auf Basis der in Schritt 300 empfangenen Portierungsinformation in Verbindung mit der Rufnummer in dem Speicherbereich 44 des Speichers 40 gespeichert (store status). Vorzugsweise wird die Portierungsinformation gemeinsam mit der Rufnummer gespeichert, beispielsweise als ein direkt der Rufnummer zugeordneter Eintrag. In dem Fall, wie in der bevorzugten Ausführungsform des Verfahrens, in dem die Rufnummer in einem elektronischen Telefonbuch des Datenträgers 10, also beispielsweise einer SIM-Mobilfunkkarte 10, gespeichert ist, kann die Portierungsinformation neben anderen, der Rufnummer zugeordneten Datensätzen, neben der Rufnummer als Portierungsstatus gespeichert werden. Prinzipiell kann die Applikation die empfangene Portierungsinformation in jedem geeigneten Format abspeichern, sodass ein Benutzer diese als Portierungsstatus einer zugehörigen Rufnummer erkennt. Auf diese Weise hat der Benutzer den Portierungsstatus einer Rufnummer stets zusammen mit der Rufnummer im Blick, d.h. auf den Portierungsstatus ist ausgehend von der Rufnummer sofort zuzugreifen. Beispielsweise kann dieser in geeigneter Form auf einem Display eines Mobilfunkendgerätes, in welches der Datenträger 10 eingesetzt ist, in Verbindung mit der Rufnummer angezeigt werden.

Die Form, in der der Portierungsstatus in Verbindung mit der Rufnummer gespeichert wird, ist variabel und vorzugsweise vom Benutzer einstellbar. Es ist möglich, den Portierungsstatus "netzextern" mit einem "e" neben der Rufnummer in einem elektronischen Telefonbuch des Datenträgers 10 zu speichern und den Portierungsstatus "netzintern" analog mit einem "i", wobei sich intern bzw. extern jeweils auf das Netz bezieht, in dem der Datenträger 10 aktuell betrieben wird. Auf ähnliche Weise können auch Sonderzeichen, wie #, * oder dergleichen, zur Markierung des Portierungsstatus - nach vorangegangener geeigneter Definition der Bedeutung der Sonderzeichen - genutzt werden. Ebenso kann der Portierungsstatus in Form eines größeren Datensatzes gespeichert werden, beispielsweise den Namen und die Vorwahl des aktuellen Netzbetreiber zu der Rufnummer umfassend.

## Patentansprüche

1. Verfahren zum Ermitteln eines Portierungsstatus einer Rufnummer auf einem portablen Datenträger (10), umfassend die Schritte:
- Senden (200) einer Portierungsanfrage an einen Portierungsserver (70), die den Portierungsstatus einer bereitgestellten (100) Rufnummer betrifft, unabhängig von einem Verbindungsaufbau zu der Rufnummer;
- Empfangen (300) einer Portierungsinformation von dem Portierungsserver (70) als Antwort auf die Portierungsanfrage;
- Speichern (400) des Portierungsstatus basierend auf der empfangenen Portierungsinformation in Verbindung mit der Rufnummer auf dem Datenträger (10)
**dadurch gekennzeichnet, dass**
der Benutzer einstellen kann, wie viele Rufnummern in dem Datenträger (10) höchstens gespeichert werden sollen, zu denen kein Portierungsstatus bekannt ist, bis ein solcher Durchlauf des Verfahrens mit den Schritten des Sendens (200), Empfangens (300) und Speicherns (400) gestartet wird.

2. Verfahren nach Anspruch 1, **dadurch gekennzeichnet, dass** das Senden der Portierungsanfrage automatisch von dem Datenträger (10) bewirkt wird.

3. Verfahren nach Anspruch 2, **dadurch gekennzeichnet, dass** das automatische Senden der Portierungsanfrage zu vorgegebenen Zeitpunkten regelmäßig wiederholt wird.

4. Verfahren nach einem der Ansprüche 1 bis 3, **dadurch gekennzeichnet, dass** der Portierungsstatus gemeinsam mit der Rufnummer in einem Speicher (40) des portablen Datenträgers (10) abgespeichert wird.

5. Verfahren nach einem der Ansprüche 1 bis 4, **dadurch gekennzeichnet, dass** das Verfahren sequentiell für alle Rufnummern einer Menge von Rufnummern oder die Mobilfunkrufnummern der Menge von Rufnummern durchgeführt wird, wobei die Menge von Rufnummern Rufnummern umfasst, die auf dem Datenträger (10) gespeichert sind.

6. Verfahren nach Anspruch 5, **dadurch gekennzeichnet, dass** das Verfahren für diejenigen Rufnummern der Menge von Rufnummern durchgeführt wird, die seit der letzten Durchführung des Verfahrens neu zu der Menge von Rufnummern hinzugekommen sind.

7. Verfahren nach Anspruch 5 oder 6, **dadurch gekennzeichnet, dass** der portable Datenträger (10) einer Mobilfunkkarte und die Menge von Rufnummern der in einem elektronisches Telefonbuch der Mobilfunkkarte gespeicherten Rufnummern entspricht und das Verfahren für in dem elektronischen Telefonbuch gespeicherten Rufnummern durchgeführt wird.

8. Verfahren nach Anspruch 7, **dadurch gekennzeichnet, dass** der Portierungsstatus in dem elektronischen Telefonbuch der Mobilfunkkarte zusammen mit der entsprechenden Rufnummer abgespeichert wird.

9. Verfahren nach einem der Ansprüche 1 bis 8, **dadurch gekennzeichnet, dass** der portable Datenträger (10) eine Mobilfunkkarte ist und das Verfahren von einer auf der Mobilfunkkarte ausführbaren Applikation durchgeführt wird.

10. Portabler Datenträger (10), umfassend einen Speicher (40), eine Kommunikationsschnittstelle (60) und eine auf dem Datenträger (10) ausführbare Applikation, die eingerichtet ist,
- eine Portierungsanfrage an einen Portierungsserver (70) über die Kommunikationsschnittstelle (60) zu senden (200), die einen Portierungsstatus einer bereitgestellten (100) Rufnummer betrifft, wobei die Portierungsanfrage unabhängig von einem Verbindungsaufbau zu der Rufnummer gesendet wird;
- eine Portierungsinformation als Antwort auf die Portierungsanfrage über die Kommunikationsschnittstelle (60) von dem Portierungsserver (70) zu empfangen (300); und
- den Portierungsstatus basierend auf der empfangenen Portierungsinformation in dem Speicher (40) in Verbindung mit der Rufnummer abzuspeichern
**dadurch gekennzeichnet, dass**
die Applikation weiterhin eingerichtet ist, die Portierungsanfrage automatisch an den Portierungsserver zu senden, wobei der Benutzer einstellen kann, wie viele Rufnummern in dem Datenträger (10) höchstens gespeichert werden sollen, zu denen kein Portierungsstatus bekannt ist, bis die Portierungsanfrage gestartet wird.

11. Datenträger (10) nach Anspruch 10, **dadurch gekennzeichnet, dass** die Applikation eingerichtet ist, die Portierungsanfrage automatisch zu vorgegebenen Zeitpunkten regelmäßig zu wiederholen.

12. Datenträger (10) nach einem der Ansprüche 10 bis 11, **dadurch gekennzeichnet, dass** die Applikation eingerichtet ist, den Portierungsstatus gemeinsam mit der Rufnummer in dem Speicher (40) des portablen Datenträgers (10) abzuspeichern.

13. Datenträger (10) nach einem der Ansprüche 10 bis 12, **dadurch gekennzeichnet, dass** die Applikation eingerichtet ist, den Portierungsstatus sequentiell für alle Rufnummern einer Menge von Rufnummern oder die Mobilfunkrufnummern der Menge von Rufnummern bei dem Portierungsserver (70) abzufragen, wobei die Menge von Rufnummern Rufnummern umfasst, die in dem Speicher (40) des Datenträgers (10) gespeichert sind und/ oder von einem Benutzer des Datenträgers (10) dem Datenträger (10) über die Kommunikationsschnittstelle (60) manuell bereitstellt werden.

14. Datenträger (10) nach Anspruch 13, **dadurch gekennzeichnet, dass** die Applikation eingerichtet ist, den Portierungsstatus derjenigen Rufnummern der Menge von Rufnummern bei dem Portierungsserver (70) abzufragen, die seit der letzten Ermittlung des Portierungsstatus aller Rufnummern neu zu der in dem Speicher (40) gespeicherten Menge von Rufnummern hinzugekommen sind.

15. Datenträger (10) nach Anspruch 13 oder 14, **dadurch gekennzeichnet, dass** der Datenträger (10) eine Mobilfunkkarte und die Menge von Rufnummern den in einem elektronischen Telefonbuch der Mobilfunkkarte gespeicherten Rufnummern entspricht und dass die Applikation eingerichtet ist, den Portierungsstatus von in dem elektronischen Telefonbuch gespeicherten Rufnummern bei dem Portierungsserver (70) abzufragen.

16. Datenträger (10) nach Anspruch 15, **dadurch gekennzeichnet, dass** die Applikation eingerichtet ist, den Portierungsstatus einer Rufnummer in dem elektronischen Telefonbuch der Mobilfunkkarte gemeinsam mit der entsprechenden Rufnummer abzuspeichern.

## Claims

1. A method for ascertaining a porting status of a call number on a portable data carrier (10), comprising the steps of:
- sending (200) to a porting server (70) a porting request relating to the porting status of a provided (100) call number, independently of a connection establishment with the call number;
- receiving (300) porting information from the porting server (70) as a response to the porting request;
- storing (400) the porting status on the basis of the received porting information in connection with the call number on the data carrier (10)
**characterized in that** the user can set how many call numbers for which no porting status is known are to be stored at most in the data carrier (10) until such a run of the method with the steps of sending (200), receiving (300) and storing (400) is started.

2. The method according to claim 1, **characterized in that** the sending of the porting request is effected automatically by the data carrier (10).

3. The method according to claim 2, **characterized in that** the automatic sending of the porting request is regularly repeated at specified times.

4. The method according to any of claims 1 to 3, **characterized in that** the porting status is stored jointly with the call number in a memory (40) of the portable data carrier (10).

5. The method according to any of claims 1 to 4, **characterized in that** the method is carried out sequentially for all call numbers of a set of call numbers, or the mobile radio call numbers of the set of call numbers, whereby the set of call numbers comprises call numbers that are stored on the data carrier (10).

6. The method according to claim 5, **characterized in that** the method is carried out for those call numbers of the set of call numbers that have been newly added to the set of call numbers since the last carrying out of the method.

7. The method according to claim 5 or 6, **characterized in that** the portable data carrier (10) corresponds to a mobile radio card, and the set of call numbers to the call numbers stored in an electronic telephone directory of the mobile radio card, and the method is carried out for call numbers stored in the electronic telephone directory.

8. The method according to claim 7, **characterized in that** the porting status is stored together with the corresponding call number in the electronic telephone directory of the mobile radio card.

9. The method according to any of claims 1 to 8, **characterized in that** the portable data carrier (10) is a mobile radio card, and the method is carried out by an application executable on the mobile radio card.

10. A portable data carrier (10), comprising a memory (40), a communication interface (60) and an application executable on the data carrier (10) and set up to
- send (200) a porting request relating to a porting status of a provided (100) call number to a porting server (70) via the communication interface (60), whereby the porting request is sent independently of a connection establishment with the call number;
- receive (300) porting information from the porting server (70) via the communication interface (60) as a response to the porting request; and
- store the porting status in the memory (40) in connection with the call number on the basis of the received porting information
**characterized in that**
the application is further set up to send the porting request to the porting server automatically, whereby the user can set how many call numbers for which no porting status is known are to be stored at most in the data carrier (10) until the porting request is started.

11. The data carrier (10) according to claim 10, **characterized in that** the application is set up to automatically repeat the porting request regularly at specified times.

12. The data carrier (10) according to any of claims 10 to 11, **characterized in that** the application is set up to store the porting status in the memory (40) of the portable data carrier (10) jointly with the call number.

13. The data carrier (10) according to any of claims 10 to 12, **characterized in that** the application is set up to query the porting server (70) for the porting status sequentially for all call numbers of a set of call numbers or the mobile radio call numbers of the set of call numbers, whereby the set of call numbers comprises call numbers that are stored in the memory (40) of the data carrier (10) and/or are provided to the data carrier (10) via the communication interface (60) manually by a user of the data carrier (10).

14. The data carrier (10) according to claim 13, **characterized in that** the application is set up to query the porting server (70) for the porting status of those call numbers of the set of call numbers that have been newly added to the set of call numbers stored in the memory (40) since the last ascertainment of the porting status of all call numbers.

15. The data carrier (10) according to claim 13 or 14, **characterized in that** the data carrier (10) corresponds to a mobile radio card, and the set of call numbers to the call numbers stored in an electronic telephone directory of the mobile radio card, and that the application is set up to query the porting server (70) for the porting status of call numbers stored in the electronic telephone directory.

16. The data carrier (10) according to claim 15, **characterized in that** the application is set up to store the porting status of a call number in the electronic telephone directory of the mobile radio card jointly with the corresponding call number.

## Revendications

1. Procédé pour déterminer un état de portage d'un numéro d'appel sur un support de données (10) portable, comportant les étapes :
- émission (200) d'une demande de portage vers un serveur de portage (70), laquelle concerne l'état de portage d'un numéro d'appel mis à disposition (100), indépendamment de la structure de liaison vers le numéro d'appel ;
- réception (300) d'une information de portage émanant du serveur de portage (70), en tant que réponse à la demande de portage ;
- mémorisation (400) sur le support de données (10), en association avec le numéro d'appel, de l'état de portage basé sur l'information de portage reçue ;
**caractérisé en ce que**
l'utilisateur peut régler le nombre de numéros d'appel à stocker au maximum dans le support de données (10), pour lesquels aucun état de portage n'est connu, jusqu'au lancement du déroulement du procédé avec les étapes d'émission (200), de réception (300) et de mémorisation (400).

2. Procédé selon la revendication 1, **caractérisé en ce que** l'émission de la demande de portage est induite automatiquement par le support de données (10).

3. Procédé selon la revendication 2, **caractérisé en ce que** l'émission automatique de la demande de portage est répétée régulièrement à des instants prédéfinis.

4. Procédé selon l'une quelconque des revendications 1 à 3, **caractérisé en ce que** l'état de portage est stocké conjointement avec le numéro d'appel dans une mémoire (40) du support de données (10) portable.

5. Procédé selon l'une quelconque des revendications 1 à 4, **caractérisé en ce que** le procédé est mis en oeuvre de manière séquentielle pour tous les numéros d'appel d'un ensemble de numéros d'appel ou pour les numéros d'appel de radiotéléphonie mobile de l'ensemble de numéros d'appel, l'ensemble de numéros d'appel comprenant des numéros d'appel qui sont mémorisés sur le support de données (10).

6. Procédé selon la revendication 5, **caractérisé en ce que** le procédé est mis en oeuvre pour les numéros d'appel de l'ensemble de numéros d'appel, lesquels, depuis la dernière mise en oeuvre du procédé, se sont ajoutés nouvellement à l'ensemble de numéros d'appel.

7. Procédé selon la revendication 5 ou 6, **caractérisé en ce que** le support de données (10) portable correspond à une carte de radiotéléphonie mobile et l'ensemble de numéros d'appel correspond aux numéros d'appel stockés dans un répertoire de téléphone électronique de la carte de radiotéléphonie mobile, et le procédé est mis en oeuvre pour des numéros d'appel stockés dans le répertoire de téléphone électronique.

8. Procédé selon la revendication 7, **caractérisé en ce que** l'état de portage est stocké, conjointement avec le numéro d'appel correspondant, dans le répertoire de téléphone électronique de la carte de radiotéléphonie mobile.

9. Procédé selon l'une quelconque des revendications 1 à 8, **caractérisé en ce que** le support de données (10) portable est une carte de radiotéléphonie mobile et le procédé est mis en oeuvre par une application pouvant se dérouler sur la carte de radiotéléphonie mobile.

10. Support de données (10) portable, comprenant une mémoire (40), une interface de communication (60) et une application, qui peut se dérouler sur le support de données (10) et qui est configurée
- pour émettre (200) une demande de portage vers un serveur de portage (70) via l'interface de communication (60), ladite demande de portage concernant un état de portage d'un numéro d'appel mis à disposition (100), la demande de portage étant émise indépendamment de la structure de liaison vers le numéro d'appel ;
- pour recevoir (300), via l'interface de communication (60), une information de portage en tant que réponse à la demande de portage émanant du serveur de portage (70) ; et
- pour stocker dans la mémoire (40), en association avec le numéro d'appel, l'état de portage, basé sur l'information de portage reçue ;
**caractérisé en ce que**
l'application est également configurée pour émettre la demande de portage automatiquement vers le serveur de portage, l'utilisateur pouvant régler le nombre de numéros d'appel à stocker au maximum dans le support de données (10), pour lesquels aucun état de portage n'est connu, jusqu'à la mise en marche de la demande de portage.

11. Support de données (10) selon la revendication 10, **caractérisé en ce que** l'application est configurée pour répéter régulièrement automatiquement la demande de portage à des instants prédéfinis.

12. Support de données (10) selon l'une quelconque des revendications 10 à 11, **caractérisé en ce que** l'application est configurée pour mémoriser l'état de portage conjointement avec le numéro d'appel dans la mémoire (40) du support de données (10) portable.

13. Support de données (10) selon l'une quelconque des revendications 10 à 12, **caractérisé en ce que** l'application est configurée pour demander de manière séquentielle au serveur de portage (70) l'état de portage pour tous les numéros d'appel d'un ensemble de numéros d'appel ou pour les numéros d'appel de radiotéléphonie mobile de l'ensemble de numéros d'appel, l'ensemble de numéros d'appel comprenant des numéros d'appel qui sont stockés dans la mémoire (40) du support de données (10), et/ou pour être mis manuellement à la disposition du support de données (10) par un utilisateur du support de données (10) via l'interface de communication (60).

14. Support de données (10) selon la revendication 13, **caractérisé en ce que** l'application est configurée pour interroger dans le serveur de portage (70) l'état de portage des numéros d'appel de l'ensemble de numéros d'appel, lesquels, depuis la dernière détermination de l'état de portage, se sont ajoutés nouvellement à l'ensemble de numéros d'appel stockés dans la mémoire (40).

15. Support de données (10) selon la revendication 13 ou 14, **caractérisé en ce que** le support de données (10) correspond à une carte de radiotéléphonie mobile et l'ensemble de numéros d'appel correspond aux numéros d'appel stockés dans un répertoire de téléphone électronique de la carte de radiotéléphonie mobile, et **en ce que** l'application est configurée pour interroger le serveur de portage (70) sur l'état de portage des numéros d'appel stockés dans le répertoire de téléphone électronique.

16. Support de données (10) selon la revendication 15, **caractérisé en ce que** l'application est configurée pour stocker l'état de portage d'un numéro d'appel, conjointement avec le numéro d'appel correspondant, dans le répertoire de téléphone électronique.
